# EUROPÄISCHE PATENTSCHRIFT

(11) **EP 2 091 874 B1**
(45) Veröffentlichungstag und Bekanntmachung des Hinweises auf die Patenterteilung: **27.06.2012**
(21) Anmeldenummer: 07822093.6
(22) Anmeldetag: 31.10.2007
(51) Int. Cl.: C03B 19/06, C03C 14/00

(54) **VERFAHREN UND HALBZEUG ZUR HERSTELLUNG VON OPAKEM QUARZGLAS, SOWIE AUS DEM HALBZEUG HERGESTELLTES BAUTEIL**
METHOD AND SEMIFINISHED PRODUCT FOR THE PRODUCTION OF OPAQUE QUARTZ GLASS, AS WELL AS A COMPONENT PRODUCED FROM THE SEMIFINISHED PRODUCT
PROCÉDÉ ET PRODUIT SEMI-FINI POUR LA PRODUCTION DE VERRE DE SILICE OPAQUE, ET ÉLÉMENT FABRIQUE A PARTIR DE CE PRODUIT SEMI-FINI

(30) Priorität: 06.11.2006 DE 102006052512
(43) Veröffentlichungstag der Anmeldung: 26.08.2009
(73) Patentinhaber: Heraeus Quarzglas GmbH & Co. KG, 63450 Hanau (DE)
(72) Erfinder: TROMMER, Martin, 06749 Bitterfeld-Wolfen (DE); LEBER, Helmut, 63454 Hanau (DE)
(74) Vertreter: Staudt, Armin Walter
(86) Internationale Anmeldenummer: PCT/EP2007/061746
(87) Internationale Veröffentlichungsnummer: WO 2008/055833

(56) Entgegenhaltungen:
- DE-A1- 10 359 491
- DE-A1- 19 943 103
- DE-C2- 4 440 104
- US-A- 4 221 578

## Beschreibung

Die Erfindung betrifft ein Verfahren zur Herstellung von opakem Quarzglas, wobei eine amorphe SiO₂-Teilchen enthaltende Suspension erzeugt, daraus ein poröser Grünkörper gebildet, der Grünkörper getrocknet und durch Sintern unter Bildung des opaken Quarzglases verdichtet wird.

Außerdem geht es in der Erfindung um ein Halbzeug zur Herstellung von opakem Quarzglas, mit einer Matrix aus porösem SiO₂, die durch Formgießen und Trocknen einer amorphe SiO₂-Teilchen enthaltenden Suspension erzeugt ist, sowie um ein des Sintern des Halbzeugs hergestelltes Bauteil aus opakem Quarzglas.

### Stand der Technik

Aus der DE 44 40 104 C2 ist ein Verfahren der eingangs genannten Gattung für die Herstellung von opakem Quarzglas bekannt. Demnach wird ein wässriger Schlicker aus SiO₂-Teilchen mit einer chemischen Reinheit von 99,9 % SiO₂ erzeugt und in eine Gipsform gegossen. Die Oberfläche des resultierenden, porösen Grünkörpers wird anschließend mittels einer Knallgasflamme lokal auf hohe Temperaturen im Bereich von 1650 °C bis 2200 °C erhitzt, so dass sich das opake, poröse Grundmaterial in einem oberflächennahen Bereich mit einer Stärke von ca. 0,5 mm in transparentes Quarzglas umwandelt (= Verglasung).

Das so erzeugte Quarzglasbauteil zeichnet sich aufgrund seiner Opazität durch eine geringe spektrale Transmission im Wellenlängenbereich von 190 nm bis 2650 nm aus und es ist deshalb für Anwendungen in Hochtemperaturprozessen gut geeignet, bei denen es auf eine gute Wärmeisolierung ankommt. Dazu tragen neben dem niedrigen Ausdehnungskoeffizienten die für Quarzglas-Bauteile charakteristischen Eigenschaften wie eine hohe Temperaturstabilität und Temperaturwechselbeständigkeit sowie die hohe chemische Beständigkeit und die Kontaminationsfreiheit bei.

Derartige Bauteile aus opakem Quarzglas werden seit vielen Jahren insbesondere in der Halbleiterfertigung in Form von Reaktoren und Apparaturen für die Behandlung von Halbleiterbauteilen, Trägerhorden, Glocken, Tiegeln, Schutzschilden oder einfachen Quarzglas-Bauteilen, wie Rohren, Stäben, Platten, Flanschen, Ringen oder Blöcken eingesetzt.

Beim Schlickergießverfahren ergeben sich jedoch grundsätzlich Probleme infolge der Schwindung des Grünkörpers beim Trocknen und beim Sintern. Insbesondere können Schwindungsrisse entstehen. Diese sind bei niedrigen Sintertemperaturen nicht zu beseitigen, sondern nur durch ein vollständiges Aufschmelzen des Glases, was aber den Verlust der Opazität des Quarzglases bedeuten würde. Beim Entformen des Grünkörpers wirken zwangsläufig Kräfte auf diesen ein, die wegen der geringen Plastizität bereits zu Rissbildung führen können.

Diese Problematik nimmt mit zunehmender Bauteilgröße zu, diese betrifft insbesondere die Entstehung von Schwindungsrissen. Wegen der Opazität des gesinterten Bauteils können mittels üblicher Durchleuchtungsmethoden jedoch nur oberflächennahe Materialfehler festgestellt werden. Für eine Detektion und Lokalisierung der besonders kritischen Risse im Volumen des opaken Bauteils sind aufwändige Untersuchungsmethoden erforderlich, zum Beispiel Ultraschall-Untersuchugsmethoden, die jedoch auch nicht immer zu verlässlichen Ergebnissen führen.

Letztlich können auch aufwändige Untersuchungsmethoden nicht verhindern, dass rissbehaftete Bauteile unbrauchbar sind und in der Regel Materialausschuss darstellen, der gerade bei großen Quarzglas-Bauteilen und dem mit ihrer Herstellung verbundenen Zeit- und Materialaufwand hohe Kosten verursacht. Oberflächennahe Risse können durch mechanische Nachbearbeitung zwar entfernt werden, was jedoch ein ausreichendes Übermaß vor der Bearbeitung voraussetzt. Andererseits ermöglicht das Schlickergießverfahren an und für sich eine kostengünstige Herstellung von Bauteilen auch mit komplexer Geometrie, so dass es wünschenswert ist, die genannten Nachteile bei der Herstellung von opakem Quarzglas zu minimieren.

### Aufgabenstellung

Der Erfindung liegt daher die Aufgabe zugrunde, ein Verfahren anzugeben, das eine reproduzierbare Herstellung von wenig rissanfälligem opakem Quarzglas nach der Schlickermethode ermöglicht. Außerdem liegt der Erfindung die Aufgabe zugrunde, einen Grünkörper (Halbzeug) bereitzustellen, der sich durch eine geringe Rissanfälligkeit auszeichnet. Weiterhin geht es in der Erfindung um ein durch Sintern aus dem Halbzeug erhaltenes Bauteil aus opakem Quarzglas mit einstellbaren optischen Eigenschaften.

Hinsichtlich des Verfahrens wird diese Aufgabe ausgehend von einem Verfahren der eingangs genanten Gattung erfindungsgemäß dadurch gelöst, dass der Grünkörper aus einer SiO₂-Matrix und darin eingebetteten Filamenten aus Quarzglas gebildet wird, deren Volumenanteil - bezogen auf das Volumen des opaken Quarzglases - weniger als 10 % beträgt.

Beim erfindungsgemäßen Verfahren wird somit über ein Schlickerverfahren ein Grünkörper erzeugt, bei dem Filamente aus Quarzglas in einer Matrix, die aus amorphen SiO₂-Teilchen gebildet wird, eingelagert sind.

Es hat sich gezeigt, dass Risskeime bereits im nassfeuchten Zustand des Grünkörpers gebildet werden, und dass in diesem Zustand im wesentlichen Umfang auch die Rissbildung einsetzt. Dies wird darauf zurückgeführt, dass eine ausschließlich aus SiO₂-Teilchen bestehende Masse im nassen/feuchten Zustand nicht bildsam und im Wesentlichen unelastisch ist. Daher genügen geringe mechanische Belastungen, um Risskeime zu bilden oder Risse zu erzeugen. Dieser Effekt ist umso ausgeprägter, je größer der Grünkörper ist.

Es wurde gefunden, dass die Rissbildung wesentlich reduziert und die Handhabung des Grünkörpers (insbesondere das Entformen) deutlich erleichtert werden kann, wenn der Grünkörper zusätzlich lang gestreckte Zuschlagsstoffe aus Quarzglas in Form von Filamenten enthält. Wesentliches Merkmal dieser Filamente ist ihre Arteigenheit in Bezug auf die Matrix des Grünkörpers, also Quarzglas.

Unter "Arteigenheit" wird hier verstanden, dass sich die SiO₂-Gehalte von Grünkörper-Matrix und Filamenten im Idealfall nicht, jedoch maximal um 5 Gew.-%, und vorzugsweise um maximal 3 Gew.-%, voneinander unterscheiden. Bei Anwesenheit von Dotierstoffen in der Matrix des Grünkörpers und in den Filamenten sollten diese den Ausdehnungskoeffizienten beiderseits in ähnlicher Weise beeinflussen.

Wegen ihrer Arteigenheit haben SiO₂-Matrix und Quarzglas-Filamente ähnliche physikalische und chemische Eigenschaften. Dies vermeidet einerseits die Ausbildung von Spannungen beim Trocknen und Sintern des Grünkörpers und trägt zu dessen mechanischer Stabilität wesentlich bei, hat aber andererseits auch zur Folge, dass die Filamente nach dem Sintern im opaken Quarzglas "untergehen" und wenig oder überhaupt nicht zur mechanischen oder thermischen Stabilität des opaken Quarzglases beitragen können.

Dies ist ein wesentlicher Unterschied der vorliegenden Erfindung zu den seit langem bekannten Glasmatrix-Verbundwerkstoffen. Bei diesen Verbundwerkstoffen ist eine Faserarmierung vorgesehen, die selbstverständlich zur mechanischen oder thermischen Stabilisierung der Glasmatrix im fertigen Glasbauteil dient. Deshalb werden für die Armierung Fasern aus anderem Werkstoff als dem der Matrix eingesetzt. In der Regel handelt es sich um keramische oder kohlenstoffhaltige Fasern (SiC, CFC, Al₂O₃, Si₃N₄, Grafit) mit höherer mechanischer Festigkeit oder höherer thermischer Stabilität als der Glasmatrix. Je nach Werkstoff der Faserarmierung weist das fertige Glasbauteil eine gegenüber der Glasmatrix erhöhte Zähigkeit, Schlagfestigkeit oder Bruchzähigkeit bei hoher Temperatur auf, was eine Verwendung zum Beispiel als Sicherheits- oder Panzerglas oder als Ersatz für herkömmliche warmfeste Metalle ermöglicht.

Ein Verfahren zur Herstellung eines verstärkten Glaskörpers aus Kieselglaspulver und 10 bis 30 Gew. % Fasern (z.B. Quarzglasfasern) ist aus der DE 103 59 491 A1 bekannt.

Es sind auch so genannte "Komposit-Aerogele" bekannt, die mit Fasern verstärkt sind. Gemäß der WO 02/052086 A wird ist ein Komposit-Aerogel-Körper hergestellt, indem eine lockere und flexible Anhäufung von Quarzglasfasern mit einer polymerisierbaren Siliziumverbindung getränkt und anschließend getrocknet wird. Durch das Bereitstellen der Fasern in Form einer flexiblen Anhäufung kann eine Rissbildung vermieden und das ansonsten früh einsetzende Sintern des Aerogel-Körpers verzögert werden.

Ein weiteres Verfahren zur Herstellung eines Faserverbundwerkstoffs mit Glasmatrix ist beispielsweise aus der DE 38 77 743 T2 bekannt. Ein Kohlenstoffgarn mit einem Durchmesser um 10 µm wird in einer Aufschlämmung getränkt, die Teilchen aus Borosilikatglas enthält. Das mit Borosilikatglas getränkte Kohlenstoffgarn wird in Stücke zerhackt und anschließend auf hohe Temperatur erhitzt, so dass die Glasmatrix erweicht. Auf diese Weise wird eine spritzfähige Masse erhalten, die zwischen 15 Vol.-% und 50 Vol.-% Armierungsfasern enthält, und die mittels eines Spritzwerkzeuges in einen Hohlraum gepresst werden kann. Auf dieses Weise wird ein blockförmiger Glasverbundwerkstoff erhalten, der sich durch eine - im Vergleich zu Borosilikatglas - höhere Warmfestigkeit auszeichnet.

Bei derartigen Glasmatrix-Verbundwerkstoffen bestimmt somit die Art, Menge und Ausrichtung der Faserarmierung wesentlich die physikalischen Eigenschaften des fertigen Bauteils. Die Glasmatrix dient als Bindemasse, deren Volumenanteil in der Regel so gering wie möglich sein sollte.

Im Unterschied dazu dienen beim erfindungsgemäßen Verfahren die Filamente nicht zur mechanischen Stabilisierung des fertigen Quarzglas-Bauteils, sondern nur der eines Zwischenprodukts, nämlich des Grünkörpers. Die physikalischen Eigenschaften des daraus hergestellten opaken Quarzglases sollen durch die Filamente möglichst nicht beeinträchtigt werden. Daher wird der Volumenanteil der Filamente beim erfindungsgemäßen Verfahren so gering wie möglich gehalten und auf eine Obergrenze von 10 % beschränkt.

Beim Grünkörper handelt es sich um einen Vollkörper, um einen Hohlkörper oder um eine Schicht auf einem Basiskörper. Der Grünkörper wird in der Regel durch Ausgießen der Suspension in eine Form erhalten. Es sind aber auch andere Verarbeitungsmethoden für die Suspension geeignet, wie etwa Einsaugen in eine Form, Tauchen, Spritzen, Aufstreichen, Aufspachteln, Abziehen, Aufziehen, Aufrakeln und dergleichen.

Die Zugabe arteigener Filamente stabilisiert den Grünkörper deutlich und vermeidet oder vermindert insbesondere eine Rissbildung beim Entformen. Eine mechanische Nachbearbeitung des Grünkörpers ist wegen der verminderten Rissbildung in der Regel nicht oder nur in geringem Umfang erforderlich, so dass die Abmessungen des Grünkörper näher an den Soll-Abmessungen des gesinterten Bauteils liegen können und der Materialverlust daher minimiert werden kann.

Das nach dem Sintern des Grünkörpers erhaltene Bauteil aus opakem Quarzglas ist ein Vollkörper, ein Hohlkörper oder es bildet eine opake Quarzglasschicht auf einem Basiskörper. Die Opazität zeigt sich dadurch, dass die direkte spektrale Transmission im Wellenlängenbereich zwischen 200 nm und 2500 nm unterhalb von 2 % liegt. Dementsprechend ergibt sich ein hoher Reflexionsgrad von mehr als 95 % im infraroten Wellenlängenbereich. Die oberflächennahe Schicht des Bauteils ist in der Regel transparent, wie etwa in der oben zitierten DE 44 40 104 C2 beschrieben.

Im Grünkörper liegen die Filamente vereinzelt und statistisch verteilt oder in Form flächenhafter oder dreidimensionaler Ansammlungen vor, wie etwa in Form von Wolle, Filz, Matten, Netzen, Geweben und dergleichen.

Eine erste bevorzugte Ausführungsform des erfindungsgemäßen Verfahrens ist dadurch gekennzeichnet, dass die Filamente aus Quarzglas der Suspension vor dem Formgießen zugeführt werden.

Dies ermöglicht eine besonders homogene Verteilung der Filamente in der Suspension, bevor diese zum Grünkörper geformt wird. Durch die dadurch erzeugte Anisotropie der Filament-Orientierung werden Spannungen beim Trocknen und Sintern vermieden, so dass die Rissempfindlichkeit des Grünkörpers im Ganzen verringert wird.

Alternativ oder ergänzend dazu ist bei einer weiteren vorteilhaften Ausgestaltung des Verfahrens vorgesehen, dass die Filamente in Form eines Formteils oder in Form mehrerer Formteile vorliegen, die von der Suspension zur Bildung des Grünkörpers umhüllt werden.

Die Filamente bilden hierbei mindestens ein gerüstartiges Formteil das von der Suspension umhüllt wird.

Bei dem Formteil handelt es sich um eine gerichtete Anordnung oder um eine ungerichtete Ansammlung von Filamenten. Als Beispiel sei ein loses, unregelmäßiges Konglomerat aus einer oder mehrerer Quarzglasfasern oder eine regelmäßige Faseranordnung, wie einer Wickelspule oder dergleichen, genannt.

Je nach Anzahl und Anordnung der Formteile kann an besonders rissempfindlichen Stellen des Grünkörpers eine lokale Verstärkung der Matrix erreicht werden, ohne dass dadurch die Eigenschaften des Quarzglases nach dem Sintern nennenswert beeinträchtigt werden.

Vorzugsweise liegen die Quarzglas-Filamente in Form von Quarzglasfasern vor.

Bei den Quarzglasfasern handelt es sich um Vollfasern oder Faserkapillaren aus Quarzglas. Sie zeichnen sich durch hohe mechanische Festigkeit bei gleichzeitig hoher Elastizität aus. Die Quarzglasfasern sind gerichtet oder ungerichtet in der Matrix verteilt. Dabei können sie sowohl in Form kurzer, gestreckter Faserstücke vorliegen, als auch in Form flächenhafter oder dreidimensionaler Faser-Anordnungen oder -Konglomerate mit regelmäßiger oder unregelmäßiger Geometrie, etwa wie Netze, Gewebe, Bänder, Matten, Wolle, Filze, Vliese, Knäuel und dergleichen.

Es hat sich bewährt, wenn die Quarzglasfasern einen Außendurchmesser im Bereich von 5 µm bis 100 µm, vorzugsweise 10 bis 40 µm, aufweisen.

Fasern mit diesem Durchmesserbereich zeigen eine ausreichend hohe mechanische Festigkeit, erzeugen in ihrer Einbettung in der SiO₂-Matrix geringe Spannungen und sie lassen sich leicht sowohl als kurze Faserstücke als auch in Form von Faser-Anordnungen oder -Konglomeraten verarbeiten.

In einer bevorzugten Ausgestaltung des erfindungsgemäßen Verfahrens sind kurze Stücke der Quarzglasfasern in der Quarzglas-Matrix verteilt. Die Quarzglasfasern haben dabei vorteilhafterweise eine Länge im Bereich von 5 mm bis 100 mm, vorzugsweise 10 bis 30 mm.

Fasern mit einer Länge von weniger als 5 mm zeigen eine geringe rissmindernde Wirkung im Grünkörper. Bei Faserlängen von 100 mm und mehr erzeugen vorallem gestreckte Fasern zunehmend Spannungen im Grünkörper und außerdem wird eine Verteilung der Fasern im Grünkörper erschwert, die vernachlässigbare Auswirkungen auf die optischen Eigenschaften des fertigen opaken Quarzglases hat.

In dem Zusammenhang hat es sich besonders bewährt, wenn der Volumenanteil der Filamente bezogen auf das Volumen des fertigen opaken Quarzglases weniger als 10 %, vorzugsweise weniger als 5 % beträgt.

Infolge ihres vergleichsweise geringen Volumenanteils beeinflussen die Filamente die physikalischen Eigenschaften des fertigen Quarzglases wenig. Um die Giesfähigkeit der Suspension nicht zu beeinträchtigen ist außerdem der Massenanteil der Filamente bei solchen Verarbeitungsmethoden möglichst gering zu halten, die eine filamenthaltige, gießfähige Suspension erfordern.

Der Volumenanteil der Filamente entspricht wegen der "Arteigenheit" auch im Wesentlichen ihrem Gewichtsanteil. Bei einem Volumenanteil von weniger als 1 % macht sich die festigkeitssteigernde und rissvermindemde Wirkung auf den Grünkörperjedoch wenig bemerkbar.

Vorzugsweise haben die amorphen SiO₂-Teilchen der SiO₂-Matrix Teilchengrößen im Bereich bis maximal 200 µm, vorzugsweise maximal 100 µm, auf, wobei SiO₂-Teilchen mit Teilchengrößen im Bereich zwischen 1 µm und 60 µm den größten Volumenanteil ausmachen.

SiO₂-Teilchen in diesem Größenbereich zeigen in Verbindung mit einem hohen Feststoffgehalt der Suspension ein vorteilhaftes Sinterverhalten und eine vergleichsweise geringe Trockenschwindung, und sie erleichtern so eine rissfreie Trocknung des Grünkörpers. Dies kann auf Wechselwirkungen der SiO₂-Teilchen untereinander zurückgeführt werden.

Im Hinblick hierauf hat es sich als besonders günstig erwiesen, wenn die SiO₂-Teilchen eine Teilchengrößenverteilung aufweisen, die durch einen D₅₀ -Wert von weniger als 50 µm, vorzugsweise weniger als 40 µm, gekennzeichnet ist.

Die Suspension kann auf Basis eines organischen Lösungsmittels, vorzugsweise auf alkoholischer Basis, oder auf wässriger Basis bestehen. Im letztgenannten Fall kann sich die polare Natur der wässrigen Phase auf die Wechselwirkung der SiO₂-Teilchen vorteilhaft auswirken, die das Trocknen und Sintern des Grünkörpers erleichtern.

Dazu trägt auch eine Verfahrensweise bei, bei welcher die SiO₂-Teilchen durch Nassmahlen von SiO₂-Ausgangskörnung hergestellt werden.

Hierbei wird die gewünschte Teilchengrößenverteilung im Homogenisierungsprozess der Suspension in Abhängigkeit von der Mahldauer und der Zugabe von amorpher Ausgangskörnung eingestellt. Beim Nassmahlen entstehen innerhalb der Suspension amorphe SiO₂-Teilchen jeder Größe, auch solche, die durch Wechselwirkungen untereinander bereits in der Suspension die oben beschriebenen Wechselwirkungen und Bindungen ausbilden.

Der SiO₂-Gehalt der amorphen SiO₂-Teilchen beträgt vorzugsweise mindestens 99,9 Gew.-%.

Der Feststoffanteil einer unter Einsatz derartiger Teilchen hergestellten Suspension besteht zu mindestens 99,9 Gew.-% aus SiO₂. Bindemittel oder dergleichen Zusatzstoffe sind nicht vorgesehen. Der Gehalt an Verunreinigungen beträgt vorzugsweise weniger als 1 Gew.-ppm. Eine Kontaminations- oder Kristallisationsgefahr geht von diesem Ausgangsmaterial nicht aus. Der Cristobalitanteil im getrockneten Grünkörper sollte höchstens 0,1 Gew.-% betragen, da es andernfalls beim Sintern zu einer Kristallisation und damit zum Ausschuss des Bauteils kommen kann.

In Bezug auf das Halbzeug wird die oben genannte Aufgabe ausgehend von dem eingangs genannten Bauteil erfindungsgemäß dadurch gelöst, dass in der Matrix Filamente aus Quarzglas eingebettet sind, deren Volumenanteil - bezogen auf das Volumen des opaken Quarzglases - weniger als 10 % beträgt.

Beim erfindungsgemäßen Halbzeug sind somit Filamente aus Quarzglas in einer Matrix aus porösem SiO₂ eingebettet. Das Halbzeug wird mittels eines Schlickerverfahrens hergestellt. Bei dem Halbzeug handelt es sich um einen Grünkörper vor dem Sintern der Matrix aus amorphen SiO₂-Teilchen.

Das erfindungsgemäße Halbzeug liegt als Vollkörper, Hohlkörper oder als Schicht auf einem Basiskörper vor. In jedem Fall sind beim erfindungsgemäßen Halbzeug Filamente aus Quarzglas in einer Matrix aus porösem SiO₂ eingebettet. Dadurch werden Risskeime und Rissbildung bereits im nassfeuchten Zustand des Grünkörpers vermieden.

Bei den Filamenten handelt es sich um lang gestreckte Zuschlagsstoffe aus Quarzglas. Wesentliches Merkmal ist ihre Arteigenheit in Bezug auf die Matrix des Bauteils, also Quarzglas. Die Filamente bleiben auch nach dem Sintern der SiO₂-Matrix im fertigen Quarzglas-Bauteil erhalten, und zeigen sich dann in Form transparenter Glasbereiche in einer ansonsten opaken Quarzglas-Matrix.

Hinsichtlich der Definition des Begriffes "Arteigenheit" wird auf die Ausführungen zum erfindungsgemäßen Verfahren verwiesen.

Wegen ihrer Arteigenheit haben SiO₂-Matrix und Filamente ähnliche physikalische und chemische Eigenschaften. Die Arteigenheit vermeidet einerseits die Ausbildung von Spannungen beim Trocknen und Sintern des Grünkörpers und sie trägt zu dessen mechanischer Stabilität wesentlich bei, hat aber andererseits auch zur Folge, dass die Filamente nach dem Sintern des Grünkörpers nicht oder wenig zu einer Erhöhung der mechanischen oder thermischen Stabilität des Quarzglas-Bauteils beitragen.

Im Unterschied zu dem oben näher erläuterten Stand der Technik bei Glasmatrix-Verbundwerkstoffen dienen beim erfindungsgemäßen Bauteil die Filamente nur der mechanischen Stabilisierung des Grünkörpers, jedoch nicht des daraus erzeugten Endprodukts. Die physikalischen Eigenschaften des daraus hergestellten Bauteils sollen die Filamente möglichst nicht beeinträchtigen. Daher wird deren Volumenanteil im Bauteil so gering wie möglich gehalten und auf 10% beschränkt.

Die Filamente liegen vereinzelt, statistisch verteilt oder in Form flächenhafter oder dreidimensionaler Ansammlungen vor, wie etwa in Form von Wolle, Filzen, Matten, Netzen, Gewebe und dergleichen.

Vorteilhafte Ausgestaltungen des erfindungsgemäßen Bauteils ergeben sich aus den Unteransprüchen. Soweit in den Unteransprüchen angegebene Ausgestaltungen des Bauteils den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

Gemäß der Erfindung wird die oben genannte Aufgabe hinsichtlich des Bauteils gelöst, indem dieses eine Matrix aus opakem Quarzglas aufweist, in der glasige Bereiche aus transparentem Quarzglas verteilt sind, deren Volumenanteil weniger als 10 % beträgt, und die durch Einsintern von Quarzglasfasern in der Matrix erzeugt sind.

Beim erfindungsgemäßen Bauteil sind somit in einer Matrix aus opakem Quarzglas möglichst homogen verteilt glasige Quarzglasbereiche enthalten. In geringen Mengen wirken die glasigen Bereiche als optische Störstellen und können dadurch zur Opazität des Bauteils beitragen. Auf die mechanischen Eigenschaften haben die glasigen Bereiche keine oder allenfalls vernachlässigbare Auswirkungen

Das Bauteil wird durch Sintern eines Halbzeugs gemäß der Erfindung erhalten. Es handelt sich um einen Vollkörper, einen Hohlkörper oder das Bauteil bildet eine opake Quarzglasschicht auf einem Basiskörper. Die oberflächennahe Schicht des Bauteils besteht in der Regel aus vollkommen transparentem Quarzglas, etwa wie in der oben zitierten DE 44 40 104 C2 beschrieben.

Die glasigen Bereiche bilden in der opaken Matrix optische Störstellen aus "arteigenem" Werkstoff, die durch die Filamente des Grünkörpers erzeugt werden. Wie oben erläutert, bleiben die Filamente des Grünkörpers auch nach dem Sintern der SiO₂-Matrix im fertigen Quarzglas-Bauteil erhalten, und sie zeigen sich dann in Form transparenter Glasbereiche in einer ansonsten opaken Quarzglas-Matrix. Beispielsweise werden bei Filamenten in Form von Quarzglasfasern die transparenten glasigen Bereiche durch Einsintern der Quarzglasfasern in die Matrix erzeugt.

Hinsichtlich der Definition des Begriffes "Arteigenheit" wird auf die Ausführungen zum erfindungsgemäßen Verfahren verwiesen.

Wegen ihrer Arteigenheit haben opake Quarzglas-Matrix und transparente Quarzglasbereiche ähnliche physikalische und chemische Eigenschaften, so dass die Ausbildung von Spannungen beim Einsatz des Bauteils bei hohen Temperaturen vermeiden wird.

Die transparenten Quarzglasbereiche liegen statistisch verteilt oder in zusammenhängender, flächenhafter oder dreidimensionaler Form vor.

Vorteilhafte Ausgestaltungen des erfindungsgemäßen Bauteils ergeben sich aus den Unteransprüchen. Soweit in den Unteransprüchen angegebene Ausgestaltungen des Bauteils den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Ausführungsbeispiel

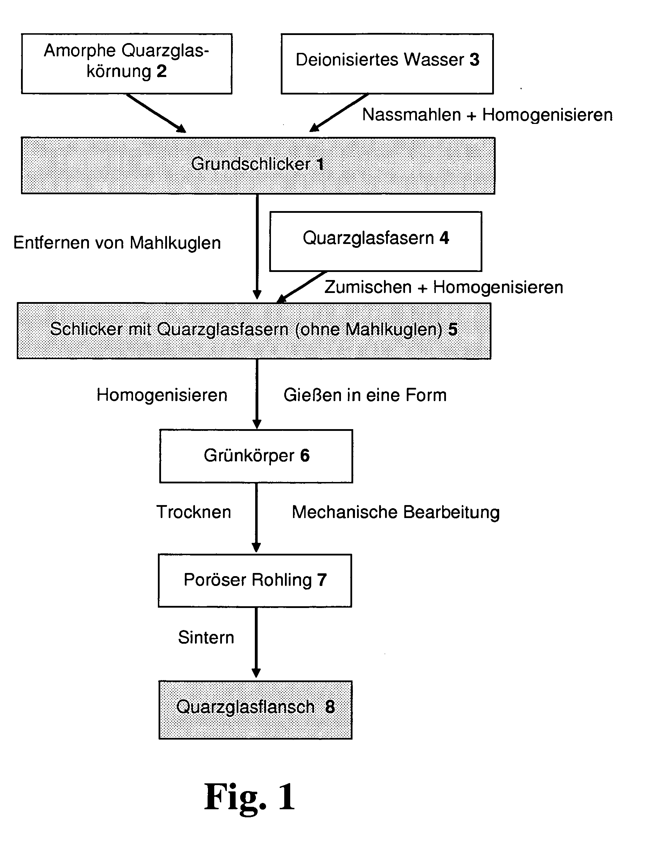

Nachfolgend wird die Erfindung anhand von Ausführungsbeispielen und einer Zeichnung näher erläutert. Als einzige Figur zeigt
**Figur 1** ein Fließdiagramm zur Erläuterung der Herstellung einer Ausführungsform des erfindungsgemäßen Quarzglas-Bauteils zum Einsatz in der Halbleiterfertigung anhand einer Verfahrensweise gemäß der Erfindung.

Nachfolgend wird das erfindungsgemäße Verfahren anhand der Herstellung eines Flansches für einen Quarzglas-Reaktor für die Behandlung von Halbleiterscheiben und unter Bezugnahme auf Figur 1 beispielhaft erläutert.

### Beispiel 1

Es wird ein homogener Grundschlicker 1 hergestellt. Für einen Ansatz von 10 kg Grundschlicker (SiO₂-Wasser-Schlicker) werden in einer mit Quarzglas ausgekleideten Trommelmühle mit ca. 20 Liter Volumeninhalt, 8,2 kg einer amorphen Quarzglaskörnung 2, die durch Schmelzen von natürlichem Quarzrohstoff erhalten worden ist, und die Korngrößen im Bereich zwischen 250 µm und 650 µm aufweist, mit 1,8 kg deionisiertem Wasser 3 mit einer Leitfähigkeit von weniger als 3 µS vermischt. Die Quarzglaskörnung 2 wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während einer Dauer von 3 Tagen soweit vermahlen, dass sich ein homogener Grundschlicker 1 mit einem Feststoffgehalt von 78 % bildet. Im Verlauf des Vermahlens kommt es infolge des in Lösung gehenden SiO₂ zu einer Absenkung des pH-Werts auf etwa 4.

Anschließend werden aus dem so erhaltenen Grundschlicker 1 die Mahlkugeln entfernt und es wird ein Filamentzuschlag in Form von Quarzglasfasern 4 in einer Menge zugemischt, bis ein Feststoffgehalt von 82 Gew.-% erreicht ist.

Bei den Quarzglasfasern 4 handelt es sich um Vollfasern aus hochreinem Quarzglas, die von der Firma Saint Gobain unter der Bezeichnung "Quartzel Chopped Strands" angeboten werden. Die Quarzglasfasern 4 haben einen Außendurchmesser um 14 µm und sie weisen eine mittlere Länge um 20 mm auf. Die Quarzglasfasern 4 werden durch fortwährendes Mischen in dem Grundschlicker 1 gleichmäßig verteilt.

Der mit dem Filamentzuschlag gefüllte Schlicker wird weitere 12 Stunden homogenisiert. Der so erhaltene, homogene Schlicker 5 hat einen Feststoffgehalt von 82 %. Der Gewichtsanteil (= Volumenanteil) der Quarzglasfasern 4 am gesamten SiO₂-Feststoff liegt bei 4 %. Die übrigen SiO₂-Teilchen 2 im Schlicker 5 zeigen eine Teilchengrößenverteilung, die durch einen D₅₀- Wert von etwa 8 µm und durch einen D₉₀-Wert von etwa 40 µm gekennzeichnet ist.

Der Schlicker 5 wird in eine Druckgussform einer kommerziellen Druckgussmaschine gegossen und über eine poröse Kunststoffmembran unter Bildung eines porösen Grünkörpers 6 entwässert. Der Grünkörper 6 hat die Form eines Flansches für einen Quarzglas-Reaktor für die Behandlung von Halbleiterscheiben.

Zum Entfernen von gebundenem Wasser wird der Grünkörper 6 bei etwa 200 °C fünf Tage lang in einem belüfteten Ofen getrocknet und nach dem Abkühlen wird der erhaltene poröse Rohling 7 mechanisch nahezu auf das Endmaß des herzustellenden Quarzglas-Flansches 8 bearbeitet.

Zum Sintern des Rohlings 7 wird dieser in einem Sinterofen unter Luft innerhalb von einer Stunde auf eine Heiztemperatur im Bereich zwischen 1150 und 1480 °C - je nach der Heizdauer und dem einzustellenden Transparenzgrad der Oberflächenschicht - aufgeheizt und bei dieser Temperatur gehalten. Das Abkühlen erfolgt mit einer Abkühlrampe von 15 °C/min auf eine Ofentemperatur von 500 °C und danach ungeregelt bei geschlossenem Ofen.

Eine Überprüfung des so erhaltenen Quarzglas-Flansches 8 auf Risse unter Einsatz eines Ultraschallmesgerätes ergab keinen Befund. Der Quarzglas-Flansch 8 zeichnet sich durch eine Matrix aus opakem Quarzglas aus, in der kleine, voneinander getrennte Bereiche aus transparentem Quarzglas homogen verteilt sind.

### Beispiel 2

Es wird ein Grundschlicker 1 hergestellt und homogenisiert wie anhand Beispiel 1 beschrieben. Anstelle des Filamentzuschlags gemäß Beispiel 1 werden dem homogenen Grundschlicker 1 sphärische, amorphe SiO₂-Teilchen 5 mit einer mittleren Korngröße um 5 µm zugemischt (D₅₀-Wert), bis ein Feststoffgehalt von 80 Gew.-% erreicht ist. Alternativ können auch Körnungen mit D₅₀-Werten von 15 µm, 30 µm oder 40 µm oder Mischungen dieser Körnungen eingesetzt werden.

Der so gefüllte Schlicker wird weitere 12 Stunden lang in einer Trommelmühle bei einer Drehzahl von 25 U/min homogenisiert und hat dann einen Feststoffgehalt von 82 % und eine Dichte von 2,0 g/cm³.

Der Schlicker wird in üblicher Weise in eine Gipsform gegossen, die einen Hohlraum in Flanschform aufweist und darin entwässert. Die Hohlraum-Wandungen der Gipsform sind lose und möglichst gleichmäßig mit Quarzglaswolle ausgelegt. Die Masse der Quarzglaswolle ist dabei so bemessen, dass sie etwa 2 % der Gesamtmasse des herzustellenden Quarzglas-Flansches ausmacht (und damit auch etwa 2 Vol.-%).

Nach dem Entwässern in der Gipsform wird der Grünkörper getrocknet, mechanisch behandelt und der so erhaltene Rohling gesintert wie oben anhand Beispiel 1 beschrieben.

Eine Überprüfung des so erhaltenen Quarzglas-Flansches auf Risse unter Einsatz eines Ultraschallmessgerätes ergab keinen Befund. Der Quarzglas-Flansch zeichnet sich durch eine Matrix aus opakem Quarzglas aus, in der zusammenhängende Bereiche aus transparentem Quarzglas verteilt sind.

## Patentansprüche

1. Verfahren zur Herstellung von opakem Quarzglas, wobei eine amorphe SiO₂-Teilchen enthaltende Suspension erzeugt, daraus ein poröser Grünkörper gebildet, der Grünkörper getrocknet und durch Sintern unter Bildung des opaken Quarzglases verdichtet wird, **dadurch gekennzeichnet, dass** ein Grünkörper (6) aus einer SiO₂-Matrix und darin eingebetteten Filamenten (4) aus Quarzglas gebildet wird, deren Volumenanteil - bezogen auf das Volumen des opaken Quarzglases - weniger als 10 % beträgt.

2. Verfahren nach Anspruch 1, **dadurch gekennzeichnet, dass** die Quarzglas-Filamente (4) als Quarzglasfasern vorliegen, die, einen Außendurchmesser im Bereich von 5 µm bis 100 µm, vorzugsweise im Bereich zwischen 10 bis 40 µm, aufweisen.

3. Verfahren nach Anspruch 1 oder 2, **dadurch gekennzeichnet, dass** der Volumenanteil der Filamente (4) bezogen auf das Volumen des trockenen opaken Quarzglases weniger als 5 % beträgt.

4. Verfahren nach einem der vorhergehenden Ansprüche, **dadurch gekennzeichnet, dass** die amorphen SiO₂-Teilchen Teilchengrößen im Bereich bis maximal 200 µm, vorzugsweise maximal 100 µm, aufweisen, wobei SiO₂-Teilchen mit Teilchengrößen im Bereich zwischen 1 µm und 60 µm den größten Volumenanteil ausmachen.

5. Verfahren nach Anspruch 4, **dadurch gekennzeichnet, dass** die SiO₂-Teilchen eine Teilchengrößenverteilung aufweisen, die durch einen D₅₀-Wert von weniger als 50 µm, vorzugsweise weniger als 40 µm, gekennzeichnet ist.

6. Verfahren nach einem der vorhergehenden Ansprüche, **dadurch gekennzeichnet, dass** die SiO₂-Teilchen durch Nassmahlen von SiO₂-Ausgangskörnung hergestellt werden.

7. Verfahren nach einem der vorhergehenden Ansprüche, **dadurch gekennzeichnet, dass** der SiO₂-Gehalt der amorphen SiO₂-Teilchen mindestens 99,9 Gew.-% beträgt.

8. Halbzeug zur Herstellung eines Bauteils aus opakem Quarzglas, umfassend eine Matrix aus porösem SiO₂, die durch Formgießen und Trocknen einer amorphe SiO₂-Teilchen enthaltenden Suspension erzeugt ist, **dadurch gekennzeichnet, dass** in der Matrix Filamente (4) aus Quarzglas eingebettet sind, deren Volumenanteil - bezogen auf das Volumen des opaken Quarzglases - weniger als 10 % beträgt.

9. Halbzeug nach Anspruch 8, **dadurch gekennzeichnet, dass** die Quarzglas-Filamente (4) als Quarzglasfasern vorliegen, die einen Außendurchmesser im Bereich von 5 µm bis 100 µm, vorzugsweise im Bereich zwischen 10 und 40 µm, aufweisen.

10. Halbzeug nach Anspruch 8 oder 9, **dadurch gekennzeichnet, dass** der Volumenanteil der Filamente (4) weniger als 5 % beträgt.

11. Halbzeug nach einem der Ansprüche 8 bis 10, **dadurch gekennzeichnet, dass** der SiO₂-Gehalt der SiO₂-Matrix mindestens 99,9 Gew.-% beträgt.

12. Bauteil, erhalten durch Sintern eines Halbzeugs nach einem der Ansprüche 8 bis 11, mit einer Matrix aus opakem Quarzglas, in der glasige Bereiche aus transparentem Quarzglas verteilt sind, deren Volumenanteil weniger als 10 % beträgt, und die durch Einsintern von Quarzglasfasern in der Matrix erzeugt sind.

13. Bauteil nach Anspruch 12, **dadurch gekennzeichnet, dass** die transparenten glasigen Bereiche aus Quarzglasfasern mit einem Außendurchmesser im Bereich von 5 µm bis 100 µm, vorzugsweise im Bereich zwischen 10 und 40 µm, erzeugt sind.

14. Bauteil nach einem Anspruch 12 oder 13, **dadurch gekennzeichnet, dass** der Volumenanteil der transparenten glasigen Bereiche weniger als 5 %, beträgt.

15. Bauteil nach einem der Ansprüche 12 bis 14, **dadurch gekennzeichnet, dass** der SiO₂-Gehalt der Matrix aus opakem Quarzglas mindestens 99,9 Gew.-% beträgt.

## Claims

1. A method for producing opaque quartz glass, wherein a suspension is produced containing amorphous SiO₂ particles, a porous green body is formed therefrom, the green body is dried and compacted by sintering so as to form the opaque quartz glass, **characterized in that** a green body (6) is formed from an SiO₂ matrix and from quartz glass filaments (4) embedded therein, wherein the volume fraction of the filaments (4) based on the volume of the dry opaque quartz glass is less than 10%.

2. The method according to claim 1, **characterized in that** the quartz glass filaments (4) are present as quartz glass fibers having an outer diameter ranging from 5 µm to 100 µm, preferably from 10 µm to 40 µm.

3. The method according to claim 1 or 2, **characterized in that** the volume fraction of the filaments (4) based on the volume of the dry opaque quartz glass is less than 5%.

4. The method according to any one of the preceding claims, **characterized in that** the amorphous SiO₂ particles have particle sizes in the range of not more than 200 µm, preferably not more than 100 µm, wherein SiO₂ particles having particle sizes ranging from 1 µm to 60 µm account for the largest volume fraction.

5. The method according to claim 4, **characterized in that** the SiO₂ particles have a particle size distribution which is distinguished by a D₅₀ value of less than 50 µm, preferably less than 40 µm.

6. The method according to any one of the preceding claims, **characterized in that** the Si02 particles are produced by wet grinding of Si02 start granules.

7. The method according to any one of the preceding claims, **characterized in that** the Si02 content of the amorphous Si02 particles is at least 99.9% by weight.

8. A semifinished product for producing a component of opaque quartz glass having a matrix of porous SiO₂ produced by mold casting and drying a suspension containing SiO₂ particles, **characterized in that** filaments (4) of quartz glass are embedded in the matrix, whereby the volume fraction of the filaments (4) based on the volume of the dry SiO₂ matrix is less than 10%.

9. The semifinished product according to claim 8, **characterized in that** the quartz glass filaments (4) are present as quartz glass fibers having an outer diameter in the range of from 5 µm to 100 µm, preferably in the range between 10 µm and 40 µm.

10. The semifinished product according to one of the claims 8 or 9, **characterized in that** the volume fraction of the filaments (4) based on the volume of the dry SiO₂ matrix is less than 5%.

11. The semifinished product according to any one of claims 8 to 10, **characterized in that** the SiO₂ content of the SiO₂ matrix is at least 99.9% by weight.

12. A component obtained by sintering a semifinished product according to any one of claims 8 to 11, comprising a matrix of opaque quartz glass in which glassy portions of transparent quartz glass are distributed, whereby the volume fraction of the transparent glassy portions is less than 10% and the transparent glassy portions are produced by sintering quartz glass fibers into the matrix.

13. The component according to claim 12, **characterized in that** the transparent glassy portions of quartz glass fibers are produced with an outer diameter in the range of from 5 µm to 100 µm, preferably in the range between 10 µm and 40 µm.

14. The component according to one of the claims 12 or 13, **characterized in that** the volume fraction of the transparent glassy portions is less than 5%.

15. The component according to one of claims 12 to 14, **characterized in that** the SiO₂ content of the matrix of opaque quartz glass is at least 99.9% by weight.

## Revendications

1. Procédé pour la fabrication de verre de quart opaque, une suspension amorphe, qui contient des particules de Si02 étant produite, dont un corps vert poreux est réalisé, le corps vert étant séché et densifié par frittage par formation du verre de quartz opaque, **caractérisé en ce qu'**un corps vert (6) est formé à partir d'une matrice Si02 et de filaments enrobés (4) en verre de quartz dont la part volumique - par rapport au volume du verre de quartz opaque - est inférieure à 10 %.

2. Procédé selon la revendication 1, **caractérisé en ce que** les filaments (4) en verre de quartz sont présents sous forme de fibres de verre de quartz qui présentent un diamètre externe compris entre 5 µm et 100 µm, de préférence compris entre 10 et 40 µm.

3. Procédé selon la revendication 1 ou 2, **caractérisé en ce que** la part volumique des filaments (4) est inférieure à 5 % par rapport au volume du verre de quartz opaque sec.

4. Procédé selon l'une des revendications précédentes, **caractérisé en ce que** les particules amorphes Si02 présentent des dimensions maximales s'élevant à 200 µm, de préférence 100 µm, les particules Si02 avec des dimensions comprises entre 1 µm et 60 µm représentant la part volumique la plus importante.

5. Procédé selon la revendication 4, **caractérisé en ce que** les particules de Si02 présentent une répartition de tailles de particules qui est **caractérisée par** une valeur D50 inférieure à 50 µm, de préférence inférieure à 40 µm.

6. Procédé selon l'une des revendications précédentes, **caractérisé en ce que** les particules de Si02 sont fabriquées par mouture humide de grains d'origine de Si02.

7. Procédé selon l'une des revendications précédentes, **caractérisé en ce que** la teneur en Si02 des particules amorphes de Si02 s'élève au moins à 99,9 % en poids.

8. Semi-produit pour la fabrication d'un composant en verre de quartz opaque, comprenant une matrice en Si02 poreux qui est générée par moulage et séchage d'une suspension amorphe contenant des particules de Si02, **caractérisée en ce que** des filaments (4) en verre de quartz sont enrobés dans la matrice, dont leur part volumique est inférieure à 10 % par rapport au volume du verre de quartz opaque.

9. Semi-produit selon la revendication 8, **caractérisé en ce que** les filaments (4) en verre de quartz se trouvent sous forme de fibres de verre de quartz qui présentent un diamètre externe compris entre 5 µm et 100 µm, de préférence compris entre 10 et 40 µm.

10. Semi-produit selon la revendication 8 ou 9, **caractérisé en ce que** la part volumique des filaments (4) est inférieure à 5 %.

11. Semi-produit selon l'une des revendications 8 à 10, **caractérisé en ce que** la teneur en Si02 des particules amorphes de Si02 s'élève au moins à 99,9 % en poids.

12. Composant obtenu par frittage d'un semi-produit selon l'une des revendications 8 à 11, avec une matrice en verre de quartz opaque, dans laquelle des zones vitreuses en verre de quartz transparent sont réparties, dont la part volumique est inférieure à 10 % et qui sont produites dans la matrice par frittage de fibres de verre.

13. Composant selon la revendication 12, **caractérisé en ce que** les zones transparentes vitreuses sont produites à partir de fibres de verre de quartz avec un diamètre externe compris entre 5 µm et 100 µm, de préférence compris entre 10 et 40 µm.

14. Composant selon l'une des revendications 12 ou 13, **caractérisé en ce que** la part volumique des zones vitreuses transparentes est inférieure à 5 %.

15. Composants selon l'une des revendications 12 à 14, **caractérisé en ce que** la teneur SiO₂ de la matrice en verre de quartz opaque est d'au moins 99,9 pour cent en poids.
